# EUROPÄISCHE PATENTSCHRIFT

(11) **EP 3 959 755 B1**
(45) Veröffentlichungstag und Bekanntmachung des Hinweises auf die Patenterteilung: **01.10.2025**
(21) Anmeldenummer: 20728981.0
(22) Anmeldetag: 15.05.2020
(51) Int. Cl.: H01M 10/04, H01M 10/613, H01M 10/625, H01M 10/6554, H01M 10/6556, H01M 50/209

(54) **ENERGIESPEICHERVORRICHTUNG UND FAHRZEUG**
ENERGY STORAGE DEVICE AND VEHICLE
DISPOSITIF DE STOCKAGE D'ÉNERGIE ET VÉHICULE

(30) Priorität: 31.05.2019 DE 102019207998
(43) Veröffentlichungstag der Anmeldung: 02.03.2022
(73) Patentinhaber: Siemens Mobility GmbH, 81739 München (DE)
(72) Erfinder: GLINKA, Martin, 91054 Buckenhof (DE); SCHENKEL, Mathias Wesley, 90475 Nürnberg (DE); TEICHMANN, Stefan, 91475 Lonnerstadt (DE)
(74) Vertreter: Siemens Patent Attorneys
(86) Internationale Anmeldenummer: PCT/EP2020/063603
(87) Internationale Veröffentlichungsnummer: WO 2020/239472

(56) Entgegenhaltungen:
- EP-A1- 2 357 689
- DE-A1- 102015 115 643
- US-A1- 2016 164 061
- US-A1- 2020 028 202

## Beschreibung

Es wird eine Energiespeichervorrichtung angegeben. Darüber hinaus wird ein Fahrzeug angegeben.

Aus dem Dokument US 2016/164061 A1 ist ein Batteriemodul bekannt, bei welchem ein Abstandhalter zwischen jeweils benachbarten Batteriezellen angeordnet ist, wobei der Abstandshalter einer Aufnahme internen oder externen Drucks dient.

Eine zu lösende Aufgabe besteht darin, eine Energiespeichervorrichtung anzugeben, die besonders kompakt ist. Außerdem soll ein Fahrzeug mit einer solchen Energiespeichervorrichtung angegeben werden.

Bei der Energiespeichervorrichtung handelt es sich beispielsweise um einen Batterietrog, insbesondere einen eigentragfähigen Batterietrog.

Erfindungsgemäß umfasst die Energiespeichervorrichtung ein Gehäuse, umfassend zwei sich gegenüberliegende Seitenwände. Die Seitenwände erstrecken sich in einem dreidimensionalen Raum mit zum Beispiel senkrecht aufeinander stehenden Achsen x**,** y und z. Die Achsen x und y definieren hier und im Folgenden laterale Richtungen und die Achse z eine vertikale Richtung. Die Seitenwände weisen jeweils eine Haupterstreckungsebene auf, die sich beispielsweise jeweils zumindest stellenweise oder vollständig entlang der Achsen y und z erstreckt. Die gegenüberliegenden Seitenwände verlaufen beispielsweise parallel zueinander.

Erfindungsgemäß umfasst die Energiespeichervorrichtung ein Modul, das zwei sich gegenüberliegende Kühlwände umfasst. Die Kühlwände sind zwischen den Seitenwänden angeordnet. Die Kühlwände erstrecken sich gemäß zumindest einer Ausführungsform im Wesentlichen senkrecht zu den Seitenwänden. Im Wesentlichen senkrecht bedeutet hier und im Folgenden, dass Haupterstreckungsebenen der beteiligten Elemente einen Winkel von mindestens 85° und höchstens 95°, insbesondere von mindestens 89° und höchstens 91°, einschließen. Weiterhin stehen die Kühlwände und die Seitenwände beispielsweise in direktem Kontakt miteinander. Die Kühlwände weisen damit jeweils eine Haupterstreckungsebene auf, die sich beispielsweise entlang der Achsen x und z erstreckt.

Erfindungsgemäß umfasst das Modul eine Kühlplatte, auf der die Kühlwände angeordnet sind. Die Kühlplatte ist gemäß zumindest einer Ausführungsform zwischen den Seitenwänden angeordnet. Die Kühlplatte erstreckt sich im Wesentlichen senkrecht zu den Seitenwänden und den Kühlwänden. Die Kühlplatte weist damit eine Haupterstreckungsebene auf, die sich beispielsweise entlang der Achsen x und y erstreckt. Weiterhin steht die Kühlplatte beispielsweise in direktem Kontakt mit den Kühlwänden und den Seitenwänden.

Die Kühlwände und/oder die Kühlplatte weisen beispielsweise eine besonders große Wärmeleitfähigkeit auf. Beispielsweise umfassen die Kühlwände und/oder die Kühlplatte jeweils ein Metall. Die Wärmeleitfähigkeit beträgt beispielsweise mindestens 10 W/(m*K), insbesondere mindestens 250 W/(m*K) Damit ist in der Energiespeicheranordnung auftretende Wärme vorteilhafterweise besonders gut ableitbar.

Erfindungsgemäß umfasst das Modul zumindest zwei Energiespeicher, die zwischen den Kühlwänden und auf der Kühlplatte angeordnet sind. Seitenflächen der Energiespeicher weisen gemäß zumindest einer Ausführungsform jeweils eine Haupterstreckungsebene auf, die sich beispielsweise entlang der Achsen x und z erstrecken. Die Seitenflächen benachbarter Energiespeicher sind in diesem Fall in Richtung der Achse y beabstandet voneinander angeordnet.

Weiterhin weisen die Seitenflächen der Energiespeicher jeweils eine Länge auf, die nur geringfügig kleiner ist als ein Abstand der Seitenwände. Der Abstand der Seitenwände entspricht beispielsweise dem Abstand der Seitenwände entlang der Achse x. Geringfügig kleiner bedeutet hier, dass die Länge der Seitenflächen der Energiespeicher höchstens 2 cm, insbesondere höchstens 0,2 cm, kleiner ist als der Abstand der Seitenwände.

Weiterhin ist es möglich, dass das Modul mehr als zwei Energiespeicher umfasst. Die Energiespeicher sind beispielsweise entlang einer Linie, die sich entlang der Achse y erstreckt, angeordnet. Hierbei sind zumindest zwei direkt benachbarte Energiespeicher in Richtung der Achse y beabstandet voneinander angeordnet. Alternativ ist es möglich, dass alle direkt benachbarten Energiespeicher entlang der Achse y beabstandet voneinander angeordnet sind.

Jeder der Energiespeicher ist beispielsweise durch ein Array aus einer Vielzahl von Batteriezellen gebildet. Die Batteriezellen sind beispielsweise entlang der Achse x nebeneinander angeordnet. Weiterhin stehen direkt benachbarte Batteriezellen eines Arrays in direktem Kontakt miteinander.

Die Batteriezellen eines Arrays sind insbesondere elektrisch leitend miteinander verbunden.

Erfindungsgemäß umfasst das Modul ein Druckelement, das zwischen den zwei Energiespeichern angeordnet ist. Das Druckelement ist gemäß einer Ausführungsform dazu ausgebildet, einen mechanischen Druck auf die Energiespeicher in lateralen Richtungen und/oder vertikalen Richtung auszuüben. Das Druckelement steht beispielsweise in direktem Kontakt zu den angrenzenden Seitenflächen der Energiespeicher. Das Druckelement erstreckt sich im Wesentlichen senkrecht zu den Seitenwänden. Das Druckelement weist damit eine Haupterstreckungsebene auf, die sich beispielsweise entlang der Achsen x und z erstreckt. Weiterhin steht das Druckelement beispielsweise in direktem Kontakt zu den angrenzenden Seitenflächen der Energiespeicher. Damit ist in den Energiespeichern auftretende Wärme besonders gut ableitbar.

Umfasst das Modul mehr als zwei Energiespeicher, umfasst das Modul insbesondere mehr als ein Druckelement. In diesem Fall ist zwischen direkt benachbarten Energiespeichern jeweils ein Druckelement angeordnet. Alternativ ist es möglich, dass das Modul mit mehr als zwei Energiespeichern ein einzelnes Druckelement aufweist. In diesem Fall sind die zwei Energiespeicher, zwischen denen das Druckelement angeordnet ist, beabstandet voneinander angeordnet. Die übrigen Energiespeicher stehen in diesem Fall in direktem Kontakt miteinander.

Erfindungsgemäß presst das Druckelement die Energiespeicher jeweils gegen die angrenzende Kühlwand. Das Druckelement übt gemäß zumindest einer Ausführungsform damit einen Druck beispielsweise entlang der Achse y auf die Energiespeicher aus. Der Druck wirkt hierbei auf benachbarte Energiespeicher, zwischen denen das Druckelement angeordnet ist, in gegensätzliche Richtungen. Damit werden die Energiespeicher durch den Druck jeweils gegen die angrenzenden Kühlwände gepresst. Durch den Druck sind die Energiespeicher mechanisch stabil mit den Kühlwänden verbunden. Die Energiespeicher sind damit in lateralen Richtungen mechanisch stabil fixiert. Weiterhin sind die Energiespeicher damit in vertikaler Richtung mechanisch stabil fixiert. Das Druckelement fixiert die Energiespeicher damit mittels einer Pressbefestigung. Vorteilhafterweise ist es dabei möglich, dass das Druckelement oder die Druckelemente das einzige Mittel zur mechanischen Fixierung der Energiespeicher bildet.

Erfindungsgemäß umfasst die Energiespeichervorrichtung ein Gehäuse, umfassend zwei sich gegenüberliegende Seitenwände. Weiterhin umfasst die Energiespeichervorrichtung ein Modul, umfassend zwei sich gegenüberliegende Kühlwände, die zwischen den Seitenwänden angeordnet sind, eine Kühlplatte, auf der die Kühlwände angeordnet sind, zumindest zwei Energiespeicher, die zwischen den Kühlwänden und auf der Druckplatte angeordnet sind, und einem Druckelement, das zwischen den zwei Energiespeichern angeordnet ist. Zudem presst das Druckelement die Energiespeicher jeweils gegen die angrenzende Kühlwand.

Eine Idee der hier beschriebenen Energiespeichervorrichtung ist unter anderem, dass die zumindest zwei Energiespeicher durch das Druckelement jeweils gegen angrenzende Kühlwände gepresst sind. Damit sind die Energiespeicher durch das Druckelement in lateralen Richtungen und in vertikaler Richtung mechanisch stabil fixiert. Durch eine solche Befestigung kann die Kühlplatte besonders dünn ausgeführt werden, da diese mechanisch kaum belastet wird. Weiterhin ist, falls ein Energiespeicher defekt ist, der defekte Energiespeicher besonders leicht austauschbar, da keine weiteren Mittel zur mechanischen Fixierung - wie zum Beispiel Schrauben oder Nieten - gelöst werden müssen.

Weiterhin sind die Energiespeicher durch eine solche Pressbefestigung besonders nahe an den Kühlwänden angeordnet. Dies erlaubt eine besonders gute Abfuhr von Wärme von den Energiespeichern zu den Kühlwänden. Zudem ist der Abstand der Seitenwände in etwa gleich der Länge der Seitenflächen der Energiespeicher. Damit ist die Energiespeichervorrichtung mit Vorteil besonders kompakt und platzsparend ausgebildet.

Erfindungsgemäß umfasst die Energiespeichervorrichtung mindestens ein weiteres Modul, das zwei sich gegenüberliegende weitere Kühlwände umfasst. Die weiteren Kühlwände sind gemäß zumindest einer Ausführungsform zwischen den Seitenwänden angeordnet. Die weiteren Kühlwände erstrecken sich beispielsweise parallel zu den Kühlwänden. Die Kühlwände und die Seitenwände stehen beispielsweise in direktem Kontakt miteinander. Der direkte Kontakt der Seitenwände mit den Kühlwänden erlaubt einen besonders guten Wärmetransport.

Erfindungsgemäß umfasst das weitere Modul eine weitere Kühlplatte, auf der die weiteren Kühlwände angeordnet sind. Die weitere Kühlplatte ist gemäß zumindest einer Ausführungsform hierbei zwischen den Seitenwänden angeordnet. Die weitere Kühlplatte erstreckt sich beispielsweise parallel zu der Kühlplatte. Die weitere Kühlplatte steht beispielsweise in direktem Kontakt mit den weiteren Kühlwänden und den Seitenwänden. Durch den direkten Kontakt der Kühlwände mit der Kühlplatte besteht vorteilhafterweise ein besonders guter thermisch leitfähiger Kontakt zwischen den Kühlwänden und der Kühlplatte.

Erfindungsgemäß umfasst das weitere Modul zumindest zwei weitere Energiespeicher, die zwischen den weiteren Kühlwänden und auf der weiteren Kühlplatte angeordnet sind. Seitenflächen benachbarter weiterer Energiespeicher sind gemäß zumindest einer weiteren Ausführungsform beispielsweise in Richtung der Achse y beabstandet voneinander angeordnet. Jeder der weiteren Energiespeicher ist beispielsweise durch ein Array aus einer Vielzahl von Batteriezellen gebildet.

Erfindungsgemäß umfasst das weitere Modul ein weiteres Druckelement, das zwischen den zwei weiteren Energiespeichern angeordnet ist. Das weitere Druckelement erstreckt sich gemäß zumindest einer Ausführungsform beispielsweise parallel zu dem Druckelement. Weiterhin steht das weitere Druckelement beispielsweise in direktem Kontakt zu den angrenzenden Seitenflächen der weiteren Energiespeicher. Damit ist in den weiteren Energiespeichern auftretende Wärme besonders gut ableitbar.

Das weitere Modul umfasst in einer weiteren Ausführungsform mehr als zwei weitere Energiespeicher. In diesem Fall umfasst das weitere Modul mehr als ein weiteres Druckelement oder ein einzelnes weiteres Druckelement.

Erfindungsgemäß presst das weitere Druckelement die weiteren Energiespeicher jeweils gegen die angrenzende weitere Kühlwand. Das weitere Druckelement übt gemäß zumindest einer Ausführungsform damit beispielsweise einen Druck entlang der Achse y auf die weiteren Energiespeicher aus. Durch das weitere Druckelement sind die weiteren Energiespeicher in lateralen Richtungen und vertikaler Richtung mechanisch stabil fixiert. Vorteilhafterweise ist das weitere Druckelement oder die weiteren Druckelemente beispielsweise das einzige Mittel zur mechanischen Fixierung der weiteren Energiespeicher.

Erfindungsgemäß ist das weitere Modul mit dem Modul durch die Seitenwände mechanisch stabil verbunden. Das weitere Modul ist gemäß zumindest einer Ausführungsform beispielsweise in vertikaler Richtung über dem Modul angeordnet. Die Kühlwände, die weiteren Kühlwände, die Kühlplatte, die weitere Kühlplatte, die Energiespeicher und die weiteren Energiespeicher weisen insbesondere die gleichen Abmessungen auf. Damit überlappen das Modul und das weitere Modul in Draufsicht auf eine Ebene in lateralen Richtungen vollständig. Die Energiespeicher des Moduls sind in diesem Fall zwischen der Kühlplatte des Moduls und der weiteren Kühlplatte des weiteren Moduls angeordnet. Vorteilhafterweise können die Energiespeicher damit von zwei Seiten gekühlt werden. Dadurch ist vorteilhafterweise eine Lebensdauer der Energiespeicher verlängert, wodurch die Betriebskosten der Energiespeicher besonders niedrig sind.

Das Modul und das weitere Modul sind jeweils zwischen den Seitenwänden angeordnet. Das Modul und das weitere Modul sind hierbei jeweils mit den Seitenwänden mechanisch stabil verbunden. Beispielsweise stehen das erste Modul und das zweite Modul in direktem Kontakt miteinander. Der direkte Kontakt erlaubt vorteilhafterweise einen besonders guten Wärmetransport.

Weiterhin kann die Energiespeichervorrichtung eine Vielzahl von weiteren Modulen umfassen. Die weiteren Module weisen jeweils die weiteren Kühlwände, die weitere Kühlplatte, die weiteren Energiespeicher und das weitere Druckelement auf. Das Modul und die weiteren Module sind in diesem Fall durch die Seitenwände mechanisch stabil verbunden. Beispielsweise sind das Modul und die weiteren Module in vertikaler Richtung übereinander angeordnet. Beispielsweise sind die weiteren Energiespeicher eines weiteren Moduls zwischen der weiteren Kühlplatte des weiteren Moduls und einer weiteren Kühlplatte eines darüber angeordneten weiteren Moduls angeordnet. Vorteilhafterweise können die weiteren Energiespeicher damit von zwei Seiten gekühlt werden. Eine Lebensdauer der weiteren Energiespeicher ist damit vorteilhafterweise verlängert und die Betriebskosten der weiteren Energiespeicher sind damit besonders niedrig.

Gemäß zumindest einer Ausführungsform ist das Druckelement zumindest stellenweise keilförmig und/oder zumindest stellenweise schlauchförmig ausgebildet. Ist das Druckelement zumindest stellenweise keilförmig ausgebildet, weist das keilförmige Druckelement im Querschnitt parallel zu den Seitenflächen in Richtung der Kühlplatte eine sich verjüngende Form auf. Wird ein solches Druckelement beispielsweise in Richtung der Kühlplatte gepresst, werden die Energiespeicher vorteilhafterweise gegen die jeweilige Kühlwand gepresst.

Weiterhin ist es möglich, dass das Druckelement mehrere Bereiche umfasst, die keilförmig ausgebildet sind. Diese Bereiche sind nebeneinander zwischen den Energiespeichern angeordnet. Vorteilhafterweise werden die Energiespeicher damit besonders homogen gegen die jeweilige Kühlwand gepresst.

Zudem ist es möglich, dass ein der Kühlplatte abgewandter vergrößerter Bereich des Druckelements in lateralen Richtungen größer als ein Abstand der Energiespeicher ausgebildet ist. Dieser vergrößerte Bereich ist beispielsweise formschlüssig auf einer der Kühlplatte abgewandten Deckfläche der Energiespeicher angeordnet. Wird ein solches Druckelement beispielsweise in Richtung der Kühlplatte gepresst, werden die Energiespeicher vorteilhafterweise gegen die jeweilige Kühlwand und durch den vergrößerten Bereich vorteilhafterweise auch gegen die Kühlplatte gepresst.

Ist das Druckelement zumindest stellenweise schlauchförmig ausgebildet, ist das schlauchförmige Druckelement mit einem Gas oder einer Flüssigkeit befüllbar. Ist das schlauchförmige Druckelement befüllt, presst das schlauchförmige Druckelement die Energiespeicher vorteilhafterweise an die angrenzenden Kühlwände. Weiterhin ist das befüllte schlauchförmige Druckelement entleerbar, sodass kein Druck auf die Energiespeicher wirkt. Vorteilhaferweise ist damit ein besonders einfacher Austausch von einzelnen Energiespeichern möglich.

Weist die Energiespeichervorrichtung beispielsweise das Modul und das weitere Modul auf, so ist das Druckelement für jedes Modul bevorzugt gleich ausgebildet.

Gemäß zumindest einer Ausführungsform sind die Energiespeicher teilweise von einem elektrisch isolierenden Isolierelement umgeben. Beispielsweise ist ein erstes Isolierelement auf einer Innenfläche der Kühlwände angeordnet. Weiterhin ist beispielsweise ein zweites Isolierelement auf einer Innenfläche der Seitenwände angeordnet. Damit sind die Energiespeicher innerhalb eines Moduls beispielsweise in lateralen Richtungen vollständig von dem Isolierelement umgeben. In diesem Fall sind das erste Isolierelement und das zweite Isolierelement in einem Bereich einer Kante zwischen den Seitenwänden und den Kühlwänden überlappend ausgebildet. Das erste Isolierelement und das zweite Isolierelement stehen in diesem Bereich in direktem Kontakt miteinander und erhöhen damit vorteilhafterweise eine Kriechstromfestigkeit der Energiespeichervorrichtung.

Ein drittes Isolierelement ist beispielsweise auf einer Innenfläche der Kühlplatte angeordnet. Das dritte Isolierelement ist beispielsweise in einem Bereich einer Kante zwischen der Kühlplatte und den Seitenwänden mit dem zweiten Isolierelement überlappend ausgebildet. Das dritte Isolierelement steht in diesen Bereichen in direktem Kontakt mit dem zweiten Isolierelement. Weiterhin ist das dritte Isolierelement beispielsweise in einem Bereich einer Kante zwischen der Kühlplatte und den Kühlwänden mit den ersten Isolierelementen überlappend ausgebildet. Das dritte Isolierelement steht in diesen Bereichen in direktem Kontakt mit dem ersten Isolierelement. Damit ist vorteilhafterweise eine Kriechstromfestigkeit der Energiespeichervorrichtung besonders hoch.

Die Innenfläche der Seitenwand, die Innenfläche der Kühlwand und/oder die Innenfläche der Kühlplatte sind in dieser Ausführungsform den Energiespeichern zugewandt.

Weist die Energiespeichervorrichtung das weitere Modul auf, sind die weiteren Energiespeicher teilweise von einem weiteren elektrisch isolierenden Isolierelement umgeben.

Gemäß zumindest einer Ausführungsform weist das Isolierelement eine elektrisch isolierende Folie auf. Die elektrisch isolierende Folie umfasst beispielsweise elektrisch isolierende Materialien und/oder dielektrische Materialien. Die elektrisch isolierende Folie umfasst beispielsweise Polymide und/oder Polyamide. Die elektrisch isolierende Folie weist beispielswese eine Dicke von höchstens 1 **mm,** insbesondere von höchstens 0,2 **mm,** auf. Durch die geringe Dicke ist in den Energiespeichern auftretende Wärme vorteilhafterweise besonders gut zu den Kühlwänden, der Kühlplatte und/oder den Seitenwänden ableitbar.

Gemäß zumindest einer Ausführungsform weist das Isolierelement einen elektrisch isolierenden Schaum auf. Der elektrisch isolierende Schaum umfasst ein elektrisch isolierendes Material. Sind beispielsweise das Modul und das weitere Modul übereinander angeordnet, ist ein derartiger elektrisch isolierender Schaum vorteilhafterweise besonders einfach zwischen den Energiespeichern und der weiteren Kühlplatte einbringbar.

Gemäß zumindest einer Ausführungsform sind eine Innenfläche der Seitenwand, eine Innenfläche der Kühlwand und/oder eine Innenfläche der Kühlplatte elektrisch isolierend ausgebildet. Die Innenfläche der Seitenwand, die Innenfläche der Kühlwand und/oder die Innenfläche der Kühlplatte umfassen beispielsweise ein elektrisch isolierendes Material. Beispielsweise können die Seitenwand, die Kühlwand und/oder die Kühlplatte zumindest stellenweise durch das elektrisch isolierende Material gebildet sein. In diesem Fall kann vorteilhafterweise zumindest stellenweise auf die elektrisch isolierende Folie verzichtet werden.

Gemäß zumindest einer Ausführungsform umfasst die Kühlplatte Kühlelemente. Beispielsweise umfasst die Kühlplatte Kühlkanäle oder Wärmerohre. Die Kühlelemente sind beispielsweise in die Kühlplatte eingebettet. Eingebettet kann dabei heißen, dass die Kühlelemente an der Kühlplatte anliegen, teilweise innerhalb der Kühlplatte angeordnet sind, vollständig innerhalb der Kühlplatte angeordnet sind und/oder von der Kühlplatte an zumindest einem Teil ihrer Außenfläche umschlossen sind. Weist die Kühlplatte Kühlkanäle auf, sind ein Kühleinlass und ein Kühlauslass auf der Kühlplatte angeordnet.

Weiterhin können die Kühlwände weitere Kühlelemente umfassen, wie beispielsweise weitere Kühlkanäle oder weitere Wärmerohre. Die weiteren Kühlkanäle der Kühlwände oder die weiteren Wärmerohre der Kühlwände sind beispielsweise mit den Kühlkanälen der Kühlplatte oder den Wärmerohren der Kühlplatte thermisch leitend verbunden. Beispielsweise sind die Kühlkanäle und die weiteren Kühlkanäle oder die Wärmerohre und die weiteren Wärmerohre einstückig ausgebildet. Vorteilhafterweise sind die weiteren Wärmerohre damit auch mit dem Kühleinlass und dem Kühlauslass auf der Kühlplatte betreibbar.

Weiterhin ist es möglich, dass das weitere Kühlelement der Kühlwände eine Vielzahl von Kühlrippen umfasst, welche die Fläche der Kühlwände vergrößern und damit vorteilhaft eine besonders gute Wärmeabfuhr erlauben.

Gemäß zumindest einer Ausführungsform umfasst die Kühlwand ein Positionierelement. Das Positionierelement ist beispielsweise dazu ausgebildet, das weitere Modul über dem Modul in lateralen Richtungen zu positionieren. Das Positionierelement weist beispielsweise die Form eines Zylinders auf. Das Positionierelement ist beispielsweise an einer der Kühlplatte gegenüberliegenden Seitenfläche der Kühlwand angeordnet. Weiterhin erstreckt sich das Positionierelement beispielsweise entlang der Achse **z.**

Gemäß zumindest einer Ausführungsform umfasst die Kühlwand eine Aufnahme für ein weiteres Positionierelement. Die Aufnahme für ein weiteres Positionierelement ist beispielsweise eine Ausnehmung, die sich in die Kühlwand erstreckt. Die Ausnehmung weist beispielsweise die Form eines Zylinders auf. In diesem Fall ist ein Durchmesser der Ausnehmung größer als ein Durchmesser des Positionierelements. Die Ausnehmung erstreckt sich beispielsweise von der der Kühlplatte gegenüberliegenden Seitenfläche der Kühlwand in die Kühlwand in vertikaler Richtung. Die Aufnahme für ein weiteres Positionierelement ist beispielsweise in lateralen Richtungen beabstandet zu dem Positionierelement angeordnet.

Weiterhin kann die weitere Kühlplatte des weiteren Moduls ein weiteres Positionierelement und eine Aufnahme für ein Positionierelement umfassen. Das weitere Positionierelement ist beispielsweise an einer der Kühlwand zugewandten Hauptfläche der weiteren Kühlplatte angeordnet. Weiterhin ist die Aufnahme für ein Positionierelement beispielsweise eine Ausnehmung und die Aufnahme für ein Positionierelement ist an einer der Kühlwand zugewandten Hauptfläche der weiteren Kühlplatte angeordnet.

Weist die Energiespeichervorrichtung das Modul und das weitere Modul auf, ist das Positionierelement in der Aufnahme für das Positionierelement eingebracht. Weiterhin ist das weitere Positionierelement in der Aufnahme für das weitere Positionierelement eingebracht. Das erste Modul und das weitere Modul können so vorteilhafterweise besonders einfach übereinander gestapelt werden, ohne dass die Module während eines Herstellungsprozesses in lateralen Richtungen verrutschen.

Gemäß zumindest einer Ausführungsform bilden die Seitenwände, die Kühlwände und die Kühlplatte einen Innenraum des Moduls. Weist die Energiespeichervorrichtung das weitere Modul auf, bilden die Seitenwände, die weiteren Kühlwände und die weitere Kühlplatte einen weiteren Innenraum des weiteren Moduls.

Gemäß zumindest einer Ausführungsform füllen die Energiespeicher des Moduls den Innenraum zu mindestens 90 %. Das heißt, fast das gesamte Volumen, das von der Kühlplatte, den Kühlwänden und den Seitenwänden umschlossen ist, ist mit den Energiespeichern gefüllt. Weist die Energiespeichervorrichtung das weitere Modul auf, füllen die weiteren Energiespeicher des weiteren Moduls den weiteren Innenraum zu mindestens 90 **%,** insbesondere zu mindestens 95 **%.** Vorteilhafterweise ist die Energiespeichervorrichtung damit besonders kompakt ausgebildet. Durch eine derartige kompakte Energiespeichervorrichtung kann eine Dichte der Energiekapazität der Energiespeicher besonders groß ausgebildet sein. Durch die besonders große Dichte kann die Energiespeichervorrichtung mit den Energiespeichern besonders leicht ausgebildet sein.

Gemäß zumindest einer Ausführungsform sind die Energiespeicher untereinander als Traktionsbatterie elektrisch verschaltet. Insbesondere ist jeder Energiespeicher und jeder weitere Energiespeicher als Traktionsbatterie elektrisch verschaltet. Eine Traktionsbatterie ist beispielsweise durch eine Vielzahl an parallel und seriell zusammengeschalteter Batteriezellen gebildet. Im Vergleich zu einem einzelnen Energiespeicher, der durch das Array an Batteriezellen gebildet ist, weist die Traktionsbatterie eine vergleichsweise hohe Ausgansspannung auf. Weist die Energiespeichervorrichtung das Modul und das weitere Modul oder die weiteren Module auf, sind die Energiespeicher und die weiteren Energiespeicher untereinander als Traktionsbatterie elektrisch verschaltet. Vorteilhafterweise sind so besonders hohe Spannungen bereitstellbar.

Gemäß zumindest einer Ausführungsform sind die Kühlwände mit den Seitenwänden durch erste Verbindungselemente mechanisch stabil verbunden. Die ersten Verbindungselemente sind beispielsweise durch eine Schraubverbindung oder Formschluss oder Klebung oder Schweißverbindung gebildet.

Gemäß zumindest einer Ausführungsform ist die Kühlplatte mit den Seitenwänden durch zweite Verbindungselemente mechanisch stabil verbunden. Die zweiten Verbindungselemente sind beispielsweise durch eine Schraubverbindung oder Formschluss oder Klebung oder Schweißverbindung gebildet.

Gemäß zumindest einer Ausführungsform ist die Kühlplatte mit den Kühlwänden durch dritte Verbindungselemente mechanisch stabil verbunden. Die dritten Verbindungselemente sind beispielsweise durch eine Schraubverbindung oder Formschluss oder Klebung oder Schweißverbindung gebildet.

Weist die Energiespeichervorrichtung das weitere Modul auf, sind die weiteren Kühlwände mit den Seitenwänden durch weitere erste Verbindungselemente mechanisch stabil verbunden. Weiterhin ist in diesem Fall die weitere Kühlplatte mit den Seitenwänden durch weitere zweite Verbindungselemente mechanisch stabil verbunden. Die Kühlplatte kann mit den weiteren Kühlwänden durch weitere dritte Verbindungselemente mechanisch stabil verbunden sein.

Es wird darüber hinaus ein Fahrzeug angegeben, das eine hier beschriebene Energiespeichervorrichtung umfasst. Sämtliche in Verbindung mit der Energiespeichervorrichtung offenbarten Merkmale sind daher auch in Verbindung mit dem Fahrzeug offenbart und umgekehrt. Da die Energiespeichervorrichtung mit den Energiespeichern, die beispielsweise in das Fahrzeug eingebaut ist, besonders leicht ausgebildet ist, ist auch eine Achslast besonders niedrig ausgebildet. Damit ist ein Energieverbrauch des Fahrzeugs vorteilhafterweise besonders niedrig. Bei dem Fahrzeug handelt es sich beispielsweise um ein Schienenfahrzeug oder um ein Kraftfahrzeug.

Weiterhin ist ein Einsatz derartiger Energiespeichervorrichtungen neben einer mobilen Energiespeicherung auch für eine stationäre Energiespeicherung vorgesehen. Die Energiespeichervorrichtung kann zum Beispiel als Solarstromspeicher in Wohnhäusern Verwendung finden.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert.

Es zeigen:
Figuren 1, 2, 3, 4 und 5 schematische Darstellungen einer Energiespeichervorrichtung gemäß einem Ausführungsbeispiel,
Figuren 6, 7 und 8 schematische Darstellungen einer Energiespeichervorrichtung gemäß einem erfindungsgemäßen Ausführungsbeispiel,
   und
Figur 9 eine schematische Darstellung eines Schienenfahrzeugs gemäß einem Ausführungsbeispiel.

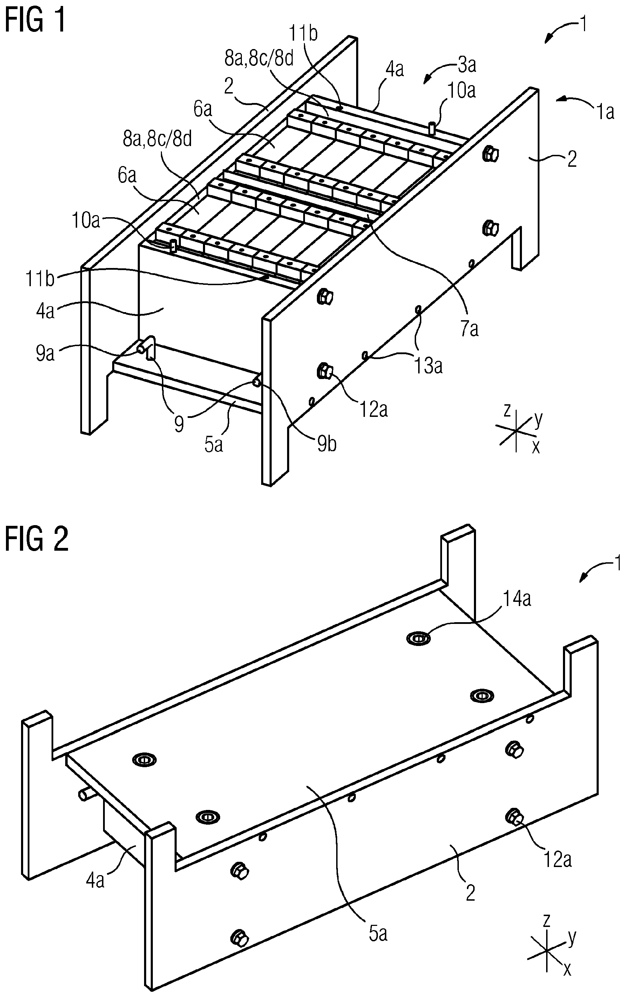

Die Energiespeichervorrichtung 1 gemäß dem Ausführungsbeispiel der Figuren 1, 2, 3, 4 und 5 umfasst ein Gehäuse 1a mit zwei Seitenwänden 2, zwischen denen ein Modul 3a angeordnet ist. Die parallel verlaufenden Seitenwände 2 weisen jeweils eine Haupterstreckungsebene auf, die sich entlang der Achsen y und z erstreckt.

Das dazwischen angeordnete Modul 3a umfasst zwei sich gegenüberliegende Kühlwände 4a. Die parallel verlaufenden Kühlwände 4a sind jeweils zwischen den Seitenwänden 2 angeordnet. Weiterhin weisen die Kühlwände 4a jeweils eine Haupterstreckungsebene auf, die sich jeweils entlang der Achsen x und z erstreckt. Die Kühlwände 4a sind mit den Seitenwänden 2 durch erste Verbindungselemente 12a mechanisch stabil verbunden.

Weiterhin umfasst das Modul 3a eine Kühlplatte 5a, auf der die Kühlwände 4a angeordnet sind. Die Kühlplatte 5a ist ebenfalls zwischen den Seitenwänden 2 angeordnet. Weiterhin weist die Kühlplatte 5a eine Haupterstreckungsebene auf, die sich entlang der Achsen x und y erstreckt. Die Kühlplatte 5a ist mit den Seitenwänden 2 durch zweite Verbindungselemente 13a mechanisch stabil verbunden. Die Kühlplatte 5a steht hier mit den Seitenwänden 2 und den Kühlwänden 4a in direktem Kontakt. Weiherhin stehen die Seitenwände 2 und die Kühlwände 4a in direktem Kontakt. Die Seitenwände 2, die Kühlwände 4a und die Kühlplatte 5b bilden hierbei einen Innenraum des Moduls 3a.

Das Modul 3a umfasst zumindest zwei Energiespeicher 6a, die zwischen den Kühlwänden 4a und auf der Kühlplatte 5b angeordnet sind. Weiterhin sind die Energiespeicher 6a zwischen den Seitenflächen 2 angeordnet. Das heißt, die Energiespeicher 6a sind in dem Innenraum des Moduls 3a angeordnet.

An den Innenflächen der Kühlwände 4a, an der eine Innenfläche der Kühlplatte 5a und an den Innenflächen der Seitenwände 2 ist jeweils ein elektrisch isolierendes Isolierelement 8 angeordnet. Die Innenflächen der Kühlwände 4a, die Innenfläche der Kühlplatte 5a und die Innenflächen der Seitenwände 2 sind dabei dem Innenraum des Moduls 3a zugewandt. Bei dem elektrisch isolierenden Isolierelement 8 handelt es sich beispielsweise um eine elektrisch isolierende Folie 8c. Alternativ handelt es sich bei dem elektrisch isolierenden Isolierelement 8 um einen elektrisch isolierenden Schaum 8d.

Zwischen den Energiespeichern 6a ist ein Druckelement 7a angeordnet. Das Druckelement 7a ist zumindest stellenweise keilförmig und/oder schlauchförmig ausgebildet. Ist das Druckelement 7a keilförmig ausgebildet, übt das keilförmige Druckelement 7a einen mechanischen Druck auf die Energiespeicher 6a entlang der Achse y aus. Das Druckelement 7a presst die Energiespeicher 6a jeweils gegen die angrenzende Kühlwand 4a entlang der Achse y. Durch den Druck sind die Energiespeicher 6a mechanisch stabil mit den Kühlwänden 4a verbunden.

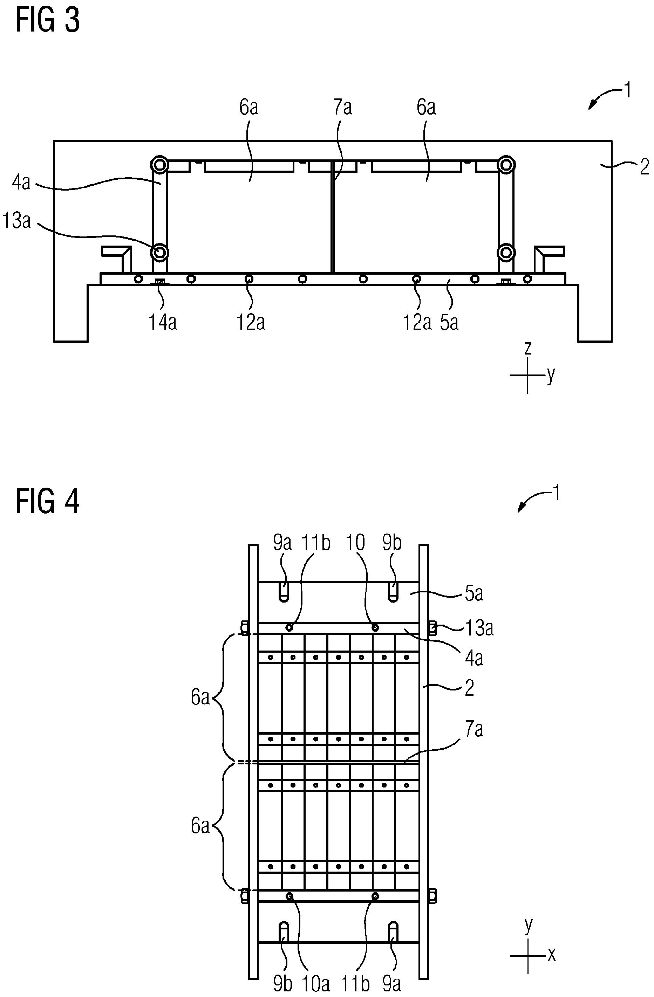

Weiterhin ist die Kühlplatte 5a mit den Kühlwänden 4a durch dritte Verbindungselemente 14a mechanisch stabil verbunden, wie den Figuren 2 und 3 dargestellt.

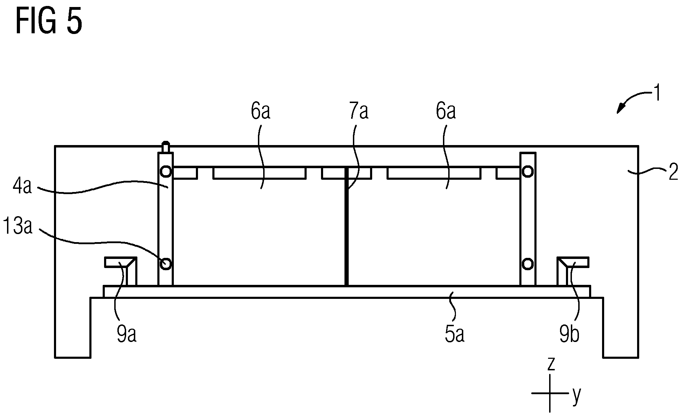

Wie in den Figuren 4 und 5 dargestellt, überragt die Kühlplatte 5a den Innenraum, der durch die Kühlwände 4a begrenzt ist, in einer Ebene entlang der Achsen x und y. In den zwei überragenden Bereichen ist jeweils ein Einlass 9a und ein Auslass 9b für beispielsweise Kühlflüssigkeit auf der Kühlplatte 5a angeordnet. Der Einlass 9a und der Auslass 9b sind gemäß der Draufsicht der Figur 4 punktsymmetrisch auf der Bodenplatte angeordnet. Alternativ ist es möglich, dass die Einlässe 9a und die Auslässe 9b gemäß der Draufsicht der Figur 4 spiegelsymmetrisch auf der Bodenplatte angeordnet sind.

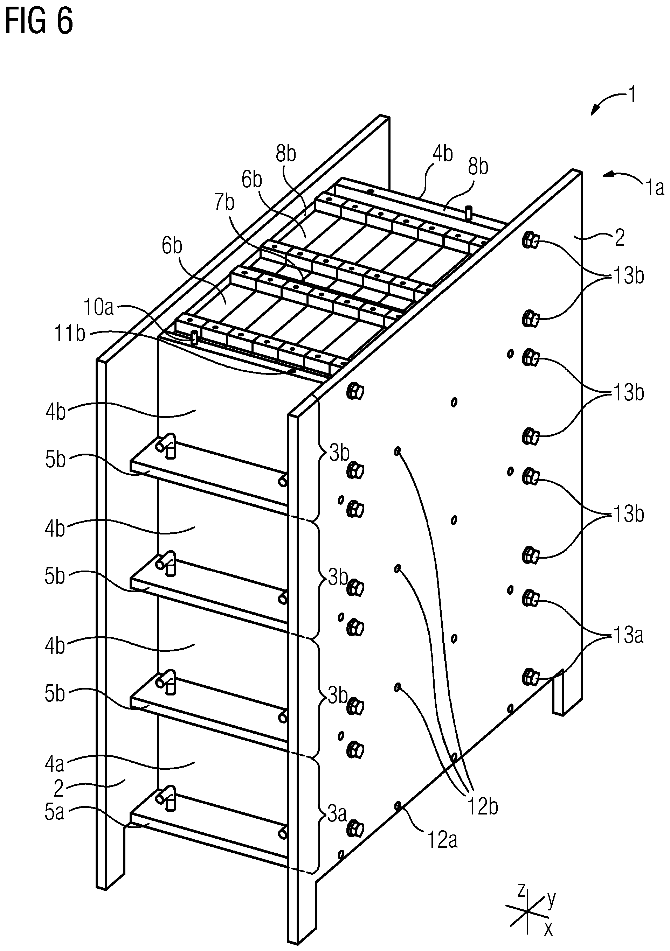

Die Energiespeichervorrichtung 1 gemäß dem erfindungsgemäßen Ausführungsbeispiel der Figuren 6, 7, und 8 umfasst im Unterschied zu dem Ausführungsbeispiel der Figuren 1, 2, 3, 4 und 5 weitere Module 3b. Die weiteren Module umfassen jeweils zwei weitere sich gegenüberliegende Kühlwände 4b, die zwischen den Seitenwänden 2 angeordnet sind. Die weiteren Kühlwände 4b sind je Seite in einer gemeinsamen Ebene mit den Kühlwänden 4a angeordnet, die entlang den Achsen x und z verläuft. Die weiteren Kühlwände 4b sind mit den Seitenwänden 2 durch weitere erste Verbindungselemente 12b mechanisch stabil verbunden.

Weiterhin umfasst jedes weitere Modul 3b eine weitere Kühlplatte 5b, auf der jeweils die weiteren Kühlwände 4b angeordnet sind. Die weiteren Kühlplatten 5b sind mit den Seitenwänden 2 durch weitere zweite Verbindungselemente 13b mechanisch stabil verbunden. Die Seitenwände 2, die weiteren Kühlwände 4b und die weitere Kühlplatte 5b eines weiteren Moduls bilden jeweils einen weiteren Innenraum 3b. In diese weiteren Innenräume 3b sind jeweils zwei weitere Energiespeicher 6b angeordnet.

An Innenflächen der weiteren Kühlwände 4b, an Innenflächen der Kühlplatte 5b und an Innenflächen der Seitenwände 2 ist jeweils ein weiteres elektrisch isolierendes Isolierelement 8b angeordnet.

Weiterhin weisen die weiteren Module 3b jeweils ein weiteres Druckelement 7b auf, das zwischen den Energiespeichern 6b angeordnet ist. Die weiteren Druckelemente 7b weisen die gleiche Form wie das Druckelement 7a gemäß dem Ausführungsbeispiel der Figuren 1, 2, 3, 4 und 5 auf. Durch die durch die weiteren Druckelemente 7b erzeugten Drücke sind die weiteren Energiespeicher 6b jeweils mechanisch stabil mit den jeweiligen weiteren Kühlwänden 4b verbunden.

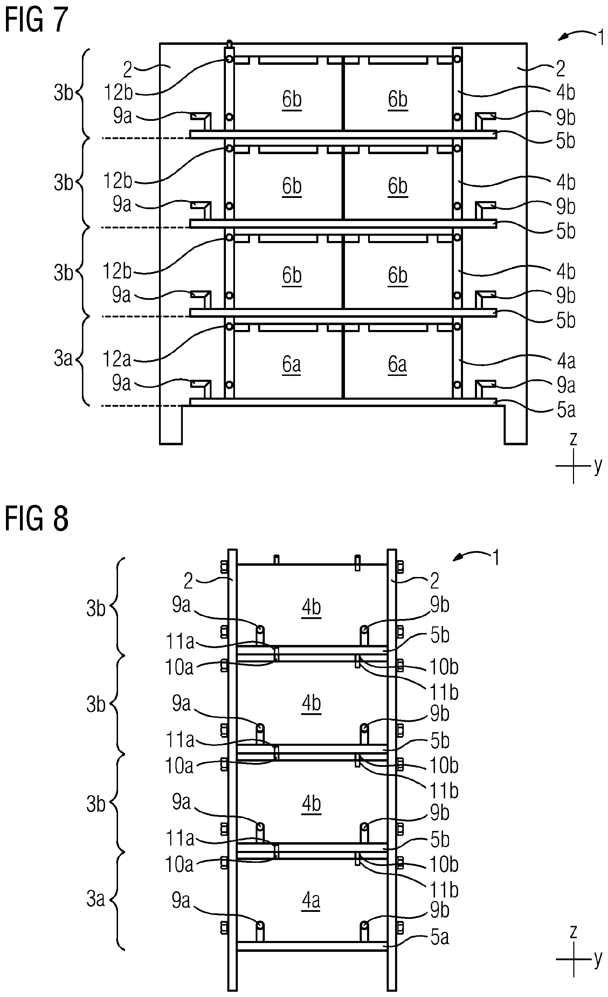

Auf den weiteren Kühlplatten 5b sind jeweils Einlässe 9a und Auslässe 9b angeordnet, wie in Figur 7 dargestellt. Die Einlässe 9a und Auslässe 9b sind beispielsweise gleich wie in dem Ausführungsbeispiel der Figur 4 angeordnet.

Wie in Figur 8 dargestellt, umfasst die Kühlwand 4a und die weiteren Kühlwände 4b jeweils ein Positionierelement 10a. Die Kühlplatte 5b und die weiteren Kühlplatten 5b umfassen jeweils ein weiteres Positionierelement 10b. Weiterhin umfassen die Kühlwand 4a und die weiteren Kühlwände 4b gegenüber jedes weiteren Positionierelements 10b jeweils eine Aufnahme für ein weiteres Positionierelement 11b. Die Kühlplatte 5a und die weiteren Kühlplatten 5b umfassen gegenüber jedes Positionierelements 10a jeweils eine Aufnahme für ein Positionierelement 11a. Jedes Positionierelement 10a ist hier zumindest teilweise in die jeweilige Aufnahme für ein Positionierelement 11a eingeführt und jedes weitere Positionierelement 10b ist zumindest teilweise in die jeweilige Aufnahme für ein weiteres Positionierelement 11b eingeführt.

Ein Zwischenraum zwischen einer weiteren Kühlplatte 5b und den Energiespeichern 6a ist mit einem isolierenden Element 8a gefüllt. Weitere Zwischenräume zwischen den weiteren Kühlplatten 5b und den weiteren Energiespeichern 6b sind beispielsweise jeweils mit einem weiteren isolierenden Element 8b gefüllt.

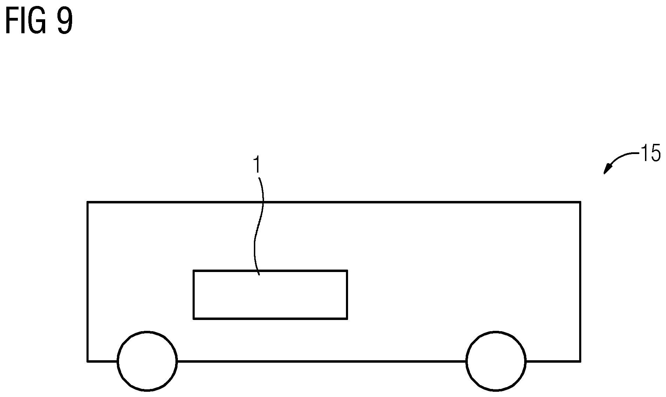

Gemäß dem Ausführungsbeispiel der Figur 9 umfasst ein Fahrzeug 15, insbesondere ein Schienenfahrzeug, zumindest eine hier beschriebene Energiespeichervorrichtung 1.

## Patentansprüche

1. Energiespeichervorrichtung (1), mit:
- einem Gehäuse (1a), umfassend zwei sich gegenüberliegende Seitenwände (2),
- einem Modul (3a), umfassend:
- zwei sich gegenüberliegende Kühlwände (4a), die zwischen den Seitenwänden (2) angeordnet sind,
- eine Kühlplatte (5a), auf der die Kühlwände (4a) angeordnet sind,
- zumindest zwei Energiespeicher (6a), die zwischen den Kühlwänden (4a) und auf der Kühlplatte (5a) angeordnet sind, und
- ein Druckelement (7a), das zwischen den zwei Energiespeichern (6a) angeordnet ist,
wobei
- das Druckelement (7a) die Energiespeicher (6a) jeweils gegen die angrenzende Kühlwand (4a) presst, und
- mindestens einem weiteren Modul (3b), umfassend:
- zwei weitere sich gegenüberliegende Kühlwände (4b),
- eine weitere Kühlplatte (5b), auf der die weiteren Kühlwände (4b) angeordnet sind,
- zumindest zwei weitere Energiespeicher (6b), die zwischen den weiteren Kühlwänden (4b) und auf der weiteren Kühlplatte (5b) angeordnet sind, und
- ein weiteres Druckelement (7b), das zwischen den zwei weiteren Energiespeichern (6b) angeordnet ist,
wobei
- das weitere Druckelement (7b) die weiteren Energiespeicher (6b) jeweils gegen die angrenzende weitere Kühlwand (4b) des weiteren Moduls (3b) presst, und
- das weitere Modul (3b) mit dem Modul (3a) durch die Seitenwände (2) mechanisch stabil verbunden ist.

2. Energiespeichervorrichtung (1) nach einem der vorhergehenden Ansprüche,
bei dem das Druckelement (7a) zumindest stellenweise keilförmig und/oder zumindest stellenweise schlauchförmig ausgebildet ist.

3. Energiespeichervorrichtung (1) nach einem der vorhergehenden Ansprüche,
bei dem die Energiespeicher (6a) teilweise von einem elektrisch isolierenden Isolierelement (8a) umgeben sind.

4. Energiespeichervorrichtung (1) nach Anspruch 4,
bei dem das Isolierelement (8a) eine elektrisch isolierende Folie (8c) umfasst.

5. Energiespeichervorrichtung (1) nach einem der Ansprüche 3 und 4,
bei dem das Isolierelement (8a) einen elektrisch isolierenden Schaum (8d) umfasst.

6. Energiespeichervorrichtung (1) nach einem der vorhergehenden Ansprüche,
bei dem eine Innenfläche der Seitenwand (2a) und/oder eine Innenfläche der Kühlwand (4c) und/oder eine Innenfläche der Kühlplatte (5c) elektrisch isolierend ausgebildet sind/ist.

7. Energiespeichervorrichtung (1) nach einem der vorhergehenden Ansprüche,
bei dem die Kühlplatte (5a) Kühlelemente (9, 9a, 9b) umfasst.

8. Energiespeichervorrichtung (1) nach einem der vorhergehenden Ansprüche, bei dem
- die Kühlwände (4a) jeweils ein Positionierelement (10a) umfassen, und
- die Kühlwände (4a) jeweils eine Aufnahme für ein weiteres Positionierelement (11b) umfassen.

9. Energiespeichervorrichtung (1) nach einem der vorhergehenden Ansprüche, bei dem
- die Seitenwände (2), die Kühlwände (4a) und die Kühlplatte (5b) einen Innenraum des Moduls (3a) bestimmen, und
- die Energiespeicher (6a) des Moduls (3a) den Innenraum zu mindestens 90 % füllen.

10. Energiespeichervorrichtung (1) nach einem der vorhergehenden Ansprüche,
bei dem die Energiespeicher (6b) untereinander als eine Traktionsbatterie elektrisch verschaltet sind.

11. Energiespeichervorrichtung (1) nach einem der vorhergehenden Ansprüche, bei dem
- die Kühlwände (4a) mit den Seitenwänden (2) durch erste Verbindungselemente (12a) mechanisch stabil verbunden sind,
- die Kühlplatte (5b) mit den Seitenwänden (2) durch zweite Verbindungselemente (13a) mechanisch stabil verbunden ist, und
- die Kühlplatte (5a) mit den Kühlwänden (4a) durch dritte Verbindungselemente (14a) mechanisch stabil verbunden ist.

12. Fahrzeug (15) mit einer Energiespeichervorrichtung (1) nach einem der vorhergehenden Ansprüche.

13. Fahrzeug nach Anspruch 12, das ein Schienenfahrzeug ist.

## Claims

1. Energy storage device (1), with:
- a housing (1a) comprising two opposing side walls (2),
- a module (3a) comprising:
- two opposing cooling walls (4a) arranged between the side walls (2),
- a cooling plate (5a) on which the cooling walls (4a) are arranged,
- at least two energy storage units (6a) arranged between the cooling walls (4a) and on the cooling plate (5a), and
- a pressure element (7a) arranged between the two energy storage units (6a),
wherein
- the pressure element (7a) presses the energy storage units (6a) against the respectively adjacent cooling wall (4a), and
- at least one further module (3b) comprising:
- two further opposing cooling walls (4b),
- a further cooling plate (5b), on which the further cooling walls (4b) are arranged,
- at least two further energy storage units (6b) arranged between the further cooling walls (4b) and on the further cooling plate (5b), and
- a further pressure element (7b) arranged between the two further energy storage units (6b),
wherein
- the further pressure element (7b) presses the further energy storage units (6b) against the respectively adjacent further cooling wall (4b) of the further module (3b), and
- the further module (3b) is connected to the module (3a) in a mechanically stable manner by the side walls (2).

2. Energy storage device (1) according to one of the preceding claims,
in which the pressure element (7a) is, at least in places, wedge-shaped and/or, at least in places, tube-shaped.

3. Energy storage device (1) according to one of the preceding claims,
in which the energy storage units (6a) are partially surrounded by an electrically insulating insulating element (8a).

4. Energy storage device (1) according to claim 4,
in which the insulating element (8a) comprises an electrically insulating film (8c).

5. Energy storage device (1) according to one of claims 3 and **4,**
in which the insulating element (8a) comprises an electrically insulating foam (8d).

6. Energy storage device (1) according to one of the preceding claims,
in which an inner surface of the side wall (2a) and/or an inner surface of the cooling wall (4c) and/or an inner surface of the cooling plate (5c) are/is electrically insulating.

7. Energy storage device (1) according to one of the preceding claims,
in which the cooling plate (5a) comprises cooling elements (9, 9a, 9b).

8. Energy storage device (1) according to one of the preceding claims, in which
- the cooling walls (4a) each comprise a positioning element (10a), and
- the cooling walls (4a) each comprise a receptacle for a further positioning element (11b).

9. Energy storage device (1) according to one of the preceding claims, in which
- the side walls (2), the cooling walls (4a) and the cooling plate (5b) define an interior space of the module (3a), and
- the energy storage units (6a) of the module (3a) fill at least 90% of the interior space.

10. Energy storage device (1) according to one of the preceding claims,
in which the energy storage units (6b) are electrically interconnected as a traction battery.

11. Energy storage device (1) according to one of the preceding claims, in which
- the cooling walls (4a) are connected to the side walls (2) in a mechanically stable manner by first connecting elements (12a),
- the cooling plate (5b) is connected to the side walls (2) in a mechanically stable manner by second connecting elements (13a), and
- the cooling plate (5a) is connected to the cooling walls (4a) in a mechanically stable manner by third connecting elements (14a).

12. Vehicle (15) with an energy storage device (1) according to one of the preceding claims.

13. Vehicle according to claim 12, which is a rail vehicle.

## Revendications

1. Dispositif (1) d'accumulation d'énergie, comprenant :
- un boîtier (1a), comprenant deux parois (2) latérales opposées,
- un module (3a), comprenant :
- deux parois (4a) de refroidissement opposées, qui sont montées entre les deux parois (2) latérales,
- une plaque (5a) de refroidissement, sur laquelle les parois (4a) de refroidissement sont montées,
- au moins deux accumulateurs (6a) d'énergie, qui sont disposés entre les parois (4a) de refroidissement et sur la plaque (5a) de refroidissement, et
- un élément (7a) de poussée, qui est monté entre les deux accumulateurs (6a) d'énergie,
dans lequel
- l'élément (7a) de poussée pousse l'accumulateur (6a) d'énergie respectivement sur la paroi (4a) de refroidissement voisine, et
- au moins un autre module (3b), comprenant :
- deux autres parois (4b) de refroidissement opposées,
- une autre plaque (5b) de refroidissement, sur laquelle sont montées les autres parois (4b) de refroidissement,
- au moins deux autres accumulateurs (6b) d'énergie, qui sont disposés entre les autres parois (4b) de refroidissement et sur l'autre plaque (5b) de refroidissement, et
- un autre élément (7b) de poussée, qui est monté entre les deux autres accumulateurs (6b) d'énergie,
dans lequel
- l'autre élément (7b) de poussée pousse les autres accumulateurs (6b) d'énergie respectivement sur l'autre paroi (4b) de refroidissement voisine de l'autre module (3b), et
- l'autre module (3b) est assemblé d'une manière stable mécaniquement au module (3a) par les parois (2) latérales.

2. Dispositif (1) d'accumulation d'énergie suivant l'une des revendications précédentes,
dans lequel l'élément (7a) de poussée est constitué au moins par endroits en forme de coin et/ou au moins par endroits en forme de tuyau souple.

3. Dispositif (1) d'accumulation d'énergie suivant l'une des revendications précédentes,
dans lequel les accumulateurs (6a) d'énergie sont entourés au moins en partie d'un élément (8a) isolant électriquement.

4. Dispositif (1) d'accumulation d'énergie suivant la revendication 3,
dans lequel l'élément (8a) isolant comprend une feuille (8c) isolante électriquement.

5. Dispositif (1) d'accumulation d'énergie suivant l'une des revendications 3 et 4,
dans lequel l'élément (8a) isolant comprend une mousse (8d) isolante électriquement.

6. Dispositif (1) d'accumulation d'énergie suivant l'une des revendications précédentes,
dans lequel une surface intérieure de la paroi (2a) latérale et/ou une surface intérieure de la paroi (4c) de refroidissement et/ou une surface intérieure de la plaque (5c) de refroidissement sont/est constituée(s) d'une manière isolante électriquement.

7. Dispositif (1) d'accumulation d'énergie suivant l'une des revendications précédentes,
dans lequel la plaque (5a) de refroidissement comprend des éléments (9, 9a, 9b) de refroidissement.

8. Dispositif (1) d'accumulation d'énergie suivant l'une des revendications précédentes, dans lequel
- les parois (4a) de refroidissement comprennent chacune un élément (10a) de mise en position, et
- les parois (4a) de refroidissement comprennent chacune un logement pour un autre élément (11b) de mise en position.

9. Dispositif (1) d'accumulation d'énergie suivant l'une des revendications précédentes, dans lequel
- les parois (2) latérales, les parois (4a) de refroidissement et la plaque (5b) de refroidissement définissent un espace intérieur du module (3a), et
- les accumulateurs (6a) d'énergie du module (3a) remplissent l'espace intérieur pour au moins 90 %.

10. Dispositif (1) d'accumulation d'énergie suivant l'une des revendications précédentes,
dans lequel les accumulateurs (6b) d'énergie sont câblés entre eux électriquement sous la forme d'une batterie de traction.

11. Dispositif (1) d'accumulation d'énergie suivant l'une des revendications précédentes, dans lequel
- les parois (4a) de refroidissement sont assemblées d'une manière stable mécaniquement aux parois (2) latérales par des premiers éléments (12a) d'assemblage,
- la plaque (5b) de refroidissement est assemblée d'une manière stable mécaniquement aux parois (2) latérales par des deuxièmes éléments (13a) d'assemblage, et
- la plaque (5a) de refroidissement est assemblée d'une manière stable mécaniquement aux parois (4a) de refroidissement par des troisièmes éléments (14a) d'assemblage.

12. Véhicule (15) ayant un dispositif (1) d'accumulation d'énergie suivant l'une des revendications précédentes.

13. Véhicule suivant la revendication 12, qui est un véhicule ferroviaire.
